# EUROPEAN PATENT APPLICATION

(11) **EP 4 187 661 A1**
(43) Date of publication of application: **31.05.2023**
(21) Application number: 22208933.6
(22) Date of filing: 22.11.2022
(51) Int. Cl.: H01M 10/04, H01M 50/105, H01M 50/183, H01M 50/184, H01M 50/186, H01M 50/557, H01M 50/548

(54) **BATTERY CELL SEALING APPARATUS**

(30) Priority: 30.11.2021 KR 20210169060
(71) Applicant: SK On Co., Ltd., Seoul 03161 (KR)
(72) Inventor: Lee, Jong Hyeok, 34124 Daejeon (KR); Kim, Hyun Ji, 34124 Daejeon (KR); Jo, Yoon Ji, 34124 Daejeon (KR); Hwang, Chang Mook, 34124 Daejeon (KR)
(74) Representative: Bird & Bird LLP

(57) **Abstract**

A battery cell sealing apparatus includes: a first sealing block and a second sealing block pressurizing a case, provided with an accommodation space in which an electrode assembly is accommodated, to seal the case; a moving unit connected to at least one of the first sealing block and the second sealing block and moving at least one of the first sealing block and the second sealing block; and a heating unit connected to the first sealing block and the second sealing block and supplying heat energy to the first sealing block and the second sealing block. The first sealing block and the second sealing block may include a plurality of block members, and may pressurize the case with the plurality of block members to form a plurality of sealing portions on the case.

## Description

### BACKGROUND

### 1. FIELD

The present disclosure relates to a battery cell sealing apparatus.

### 2. DESCRIPTION OF RELATED ART

Battery cells are chargeable and dischargeable batteries, and have been widely used not only in relatively small-sized apparatus, such as portable electronic devices, but also in medium- and large-sized apparatuses, such as a vehicle or a power storage apparatus.

A battery cell may include a case, in which a laminate of positive electrodes, negative electrodes, and separators is disposed, and may be sealed by filling the case with an electrolytic solution.

In the case of such a battery cell, gas may be generated by an electrolytic solution therein during repeated charging and discharging. The gas, contained in the case, may be discharged to the outside of the case by opening a sealing portion of the case when a pressure of the gas reaches a predetermined level or higher.

A case of a battery cell may have various types such as a pouch type, a prismatic type, a cylindrical type, or the like. A pouch-type case may be sealed by thermal fusion. A sealing apparatus may be used to thermally fuse the case.

### SUMMARY

An aspect of the present disclosure is to provide a battery cell sealing apparatus in which a plurality of sealing portions may be formed on a case of a battery cell.

Another aspect of the present disclosure is to provide a battery cell sealing apparatus having a decreased number of components and improved operational efficiency.

According to an aspect of the present disclosure, a battery cell sealing apparatus includes: a first sealing block and a second sealing block pressurizing a case, provided with an accommodation space in which an electrode assembly is accommodated, to seal the case; a moving unit connected to at least one of the first sealing block and the second sealing block and moving at least one of the first sealing block and the second sealing block; and a heating unit connected to the first sealing block and the second sealing block and supplying heat energy to the first sealing block and the second sealing block. The first sealing block and the second sealing block may include a plurality of block members, and may pressurize the case with the plurality of block members to form a plurality of sealing portions on the case.

The first sealing block and the second sealing block may include: a first block member including a straight region; and a plurality of second block members, respectively including an inclined region branching off from the straight region and having an outer circumference of which at least a region is not in contact with the straight region.

The plurality of second block members may pressurize a region, in which the case is not in contact with a positive electrode tab or a negative electrode tab of the battery cell, to form a first sealing portion on the case, and the first block member may pressurize a region, in which the case is in contact with the positive electrode tab or the negative electrode tab of the battery, and a region, in which the case is not in contact with a positive electrode tab or a negative electrode tab of the battery cell, to form a second sealing portion on the case.

The inclined regions of the plurality of second block members may be inclined in different directions.

The inclined regions of the plurality of second block members may be linearly inclined.

The inclined regions of the plurality of second block members may be nonlinearly inclined.

The first sealing block and the second sealing block may simultaneously form the plurality of sealing portions on the case.

The battery cell sealing apparatus may further include a stopper unit connected to the first sealing block and the second sealing block and limiting moving distances of the first sealing block and the second sealing block.

At least one of the first sealing block and the second sealing block may be provided with a notch.

The plurality of second block members may be provided to be coupled to or removed from the first block member.

### BRIEF DESCRIPTION OF DRAWINGS

The above and other aspects, features, and advantages of the present disclosure will be more clearly understood from the following detailed description, taken in conjunction with the accompanying drawings.
FIG. 1 is a schematic diagram of a battery cell sealed by a battery cell sealing apparatus according to an exemplary embodiment of the present disclosure.
FIG. 2 is a schematic diagram of a battery cell sealing apparatus according to an exemplary embodiment of the present disclosure.
FIG. 3 is an operating state diagram of a battery cell sealing apparatus according to an exemplary embodiment of the present disclosure.
FIG. 4 is a perspective view of a first sealing block according to an exemplary embodiment of the present disclosure.
FIG. 5 is a perspective view of a first sealing block according to another exemplary embodiment of the present disclosure.
FIG. 6 is a perspective view of a first sealing block and a second sealing block according to another exemplary embodiment of the present disclosure.
FIG. 7 is a perspective view of a first sealing block and a second sealing block according to another exemplary embodiment of the present disclosure.

### DETAILED DESCRIPTION

In order to facilitate an understanding of the description of exemplary embodiments of the present disclosure, the same reference numerals are used for the same elements in the accompanying drawings, and related elements among elements performing the same function in each exemplary embodiment are denoted by the same number or the number of extension.

Further, in order to clarify the gist of the present disclosure, a description of elements and techniques well known in the prior art will be omitted, and the present disclosure will be described in detail with reference to the accompanying drawings.

It is to be understood, however, that the spirit and scope of the present disclosure are not limited to the exemplary embodiments illustrated, and other forms may be suggested by those skilled in the art while specific components are added, changed, and deleted, also included within the scope of the same idea as the present disclosure.

In the accompanying drawings below, an X-axis may refer to a height direction of a case of a battery cell, a Y-axis may refer to a thickness direction of the case of the battery cell, and a Z-axis may refer to a width direction of the case of the cattery cell. However, the X-axis, the Y-axis, and the Z-axis are arbitrarily set directions for ease of description.

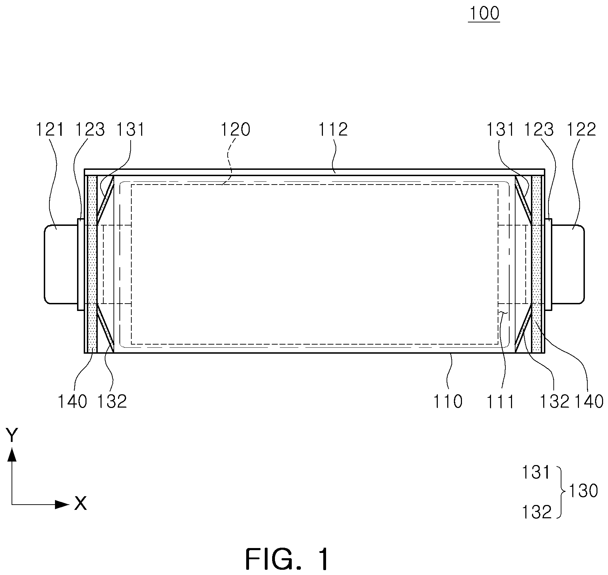

FIG. 1 is a schematic diagram of a battery cell 100 sealed by a battery cell sealing apparatus according to an example embodiment.

As illustrated in FIG. 1, a case 110 of the battery cell 100 may include an accommodation space 111 accommodating an electrode assembly 120 therein.

A positive electrode tab 121 and a negative electrode tab 122, connected to the electrode assembly 120, may be drawn out to the outside of the case 110. The case 110 may be thermally fused in a state in which a lead film 123 is attached between the case 110 and the positive electrode tab 121. This may be equally applied to the negative electrode tab 122.

In the case 110, a thermally fused region may be a first sealing portion 130 and a second sealing portion 140.

The first sealing portion 130 and the second sealing portion 140 may be formed by thermally fusing the case 110 in a state in which both surfaces of the case 110 overlap each other.

When the formation of the first sealing portion 130 and the second sealing portion 140 on the case 110 is completed, at least one end portion of the case 110 may be folded or rolled to form a folding portion 112. A formation method, position, number, and the like, of the folded part 112 are not limited to those of the present disclosure, and may be appropriately selected and applied depending on specifications required for a battery cell.

The first sealing portion 130 may be present between the accommodation space 111 and the second sealing portion 140 in a direction, parallel to an X-axis. The first sealing portion 130 may include a first oblique sealing portion 131, present in a side region of the positive electrode tab 121 in a positive Y-direction, and a second oblique sealing portion 132 present in a side region of the positive electrode tab 121 in a negative Y-direction.

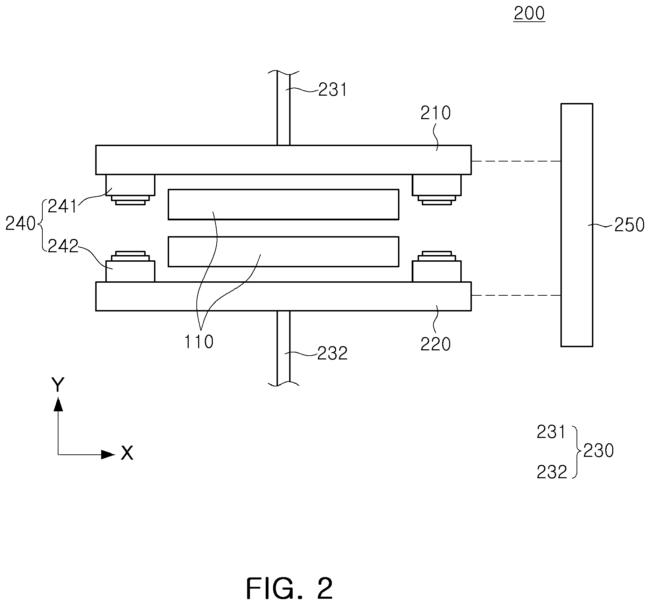

FIG. 2 is a schematic diagram of a battery cell sealing apparatus 200 according to an exemplary embodiment.

As illustrated in FIG. 2, in the battery cell sealing apparatus 200 according to an exemplary embodiment, overlapping cases 110 may be pressurized to be thermally fused. The thermally fused regions of the case 110 may be a first sealing portion (130 of FIG. 1) and a second sealing portion (140 of FIG. 1), and the first sealing portion (130 in FIG. 1) and the case 110, in which the second sealing portion (140 of FIG. 1) is formed, may be sealed.

The cases 110 may include polypropylene, aluminum, and nylon in a thickness direction, for example, in a Y-axis direction. In FIG. 2, a lowermost surface of the overlying case 110 in a negative Y-direction may include polypropylene, and an uppermost surface of the underlying case 110 in a positive Y-direction may also include polypropylene. When the cases 110 are thermally fused, the polypropylene may be thermally fused and the cases 110 may be bonded to be sealed.

A first sealing block 210 may be disposed in an uppermost portion of the case 110 in the positive Y-direction, and a second sealing block 220 may be disposed in a lowermost portion of the case 110 in the negative Y-direction. A heating unit 250 may be connected to the first sealing block 210 and the second sealing block 220. The heating unit 250 may supply heat energy to the first sealing block 210 and the second sealing block 220.

The heating unit 250 may be an electric heater. However, exemplary embodiments are not limited thereto and the type of the heating unit 250 may be appropriately selected and applied in consideration of an operating environment, a thickness of and a material of the cases, or the like.

A moving unit may be connected to the first sealing block 210 and the second sealing block 220 to move the first sealing block 210 and the second sealing block 220 to the case 110.

The moving unit 230 may include a first moving member 231 and a second moving member 232. In an exemplary embodiment, the first moving member 231 may be connected to the first sealing block 210, and the second moving member 232 may be connected to the second sealing block 220.

Each of the first moving member 231 and the second moving member 232 may be a cylinder using hydraulic pressure or pneumatic pressure. However, exemplary embodiments are not limited thereto, and each of the first moving member 231 and the second moving member 232 may be appropriately varied and applied depending on an operating environment, or the like.

Operations of the first and second moving members 231 and 232 may be manually controlled, or may be automatically controlled by connecting the first and second moving members 231 and 231 to a control unit, not illustrated.

In an exemplary embodiment, the first sealing block 210 and the second sealing block 220 may be provided with a stopper unit 240 to limit ascent and descent distances of the first sealing block 210 and the second sealing block 220.

The stopper unit 240 may include a first stopper member 241, connected to the first sealing block 210, and a second stopper member 242 connected to the second sealing block 220.

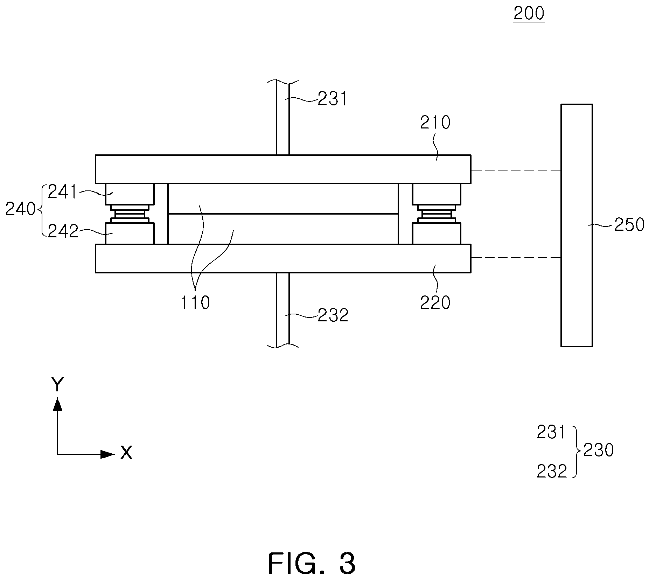

FIG. 3 is an operating state diagram of a battery cell sealing apparatus according to an exemplary embodiment.

As illustrated in FIG. 3, the first moving member 231 may moves the first sealing block 210 in the negative Y-direction, the second moving member 232 may move the second sealing block 220 in the positive Y-direction, and the case 110 may be pressurized by the first sealing block 210 and the second sealing block 220.

In this case, when the first sealing block 210 and the second sealing block 220 are connected to the heating unit 250 by a flexible wire having a changeable length, a flexible response to the movement of the first sealing block 210 and the second sealing block 220 may be provided.

When the first stopper member 241 and the second stopper member 242 contact each other, the first moving member 231 and the second moving member 232 may be provided to stop the movement of the first sealing block 210 and the second sealing block 220.

A position, in which the first stopper member 241 and the second stopper member 242 contact each other, may be appropriately set in consideration of the thickness of the case, bonding strength of the case, or the like. When the first stopper member 241 and the second stopper member 242 contact each other, the first moving member 231 and the second moving member 232 may stop operating, and the first sealing block 210 and the second sealing block 220 may complete the sealing of the case 110.

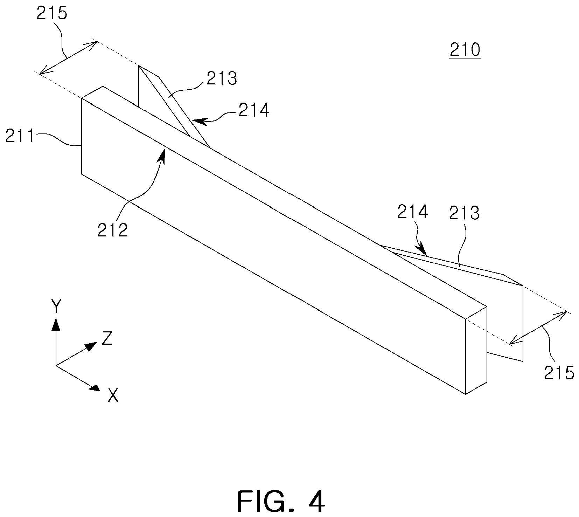

FIG. 4 is a perspective view of the first sealing block 210 according to an exemplary embodiment of the present disclosure.

As illustrated in FIG. 4, the first sealing block 210 according to an exemplary embodiment may include a first block member 211, including a straight region 212, and a plurality of second block members 213 connected to the first block member 211 and formed radially from the first block member 211.

The plurality of second block members 213 may be inclined in different directions, and may be inclined in direction in which they are away from each other. The second block member 213 may include an inclined region 214 inclined linearly with respect to the first block member 211.

An end portion of the second block member 213 may be spaced apart from an end portion of the first block member 211 by a predetermined distance, and a distance 215 may be formed between the end portion of the second block member 213 and the end portion of the first block member 211.

When the distance 215 is adjusted, the inclination of the second block member 213 with respect to the first block member 211 may be adjusted. This may be equally applied to the second sealing block (220 of FIG. 1), and the first sealing block 210 and the second sealing block (220 of FIG. 1) may be provided to have shapes corresponding to each other.

A region, in which the case of the battery cell (110 of FIG. 2) is pressurized by the first block member 211, may be the second sealing portion (140 of FIG. 1), and a region, in which the case of the battery cell (110 of FIG. 2) is pressurized by the plurality of second block members 213, may be the first sealing portion (130 of FIG. 1).

One of the plurality of second block members 213 may form a first oblique sealing portion (131 of FIG. 1), and another thereof may form a second oblique sealing portions (132 of FIG. 1) .

In addition, the plurality of second block members 213 may be present closer to the accommodation space (111 of FIG. 1) of the battery cell than the first block member 211.

The first block member 211 may be farther spaced apart from the accommodation space (111 of FIG. 1) of the battery cell than the plurality of second block members 213, and may face the positive electrode tab (121 of FIG. 1) or the negative electrode tab (122 of FIG. 1) of the electrode assembly of the battery cell in a thickness direction of the case (110 of FIG. 2) .

The first block member 211 may pressurize a region, in which the case (110 of FIG. 2) faces the positive electrode tab (121 of FIG. 1) or the negative electrode tab (122 of FIG. 1), and a region in which the case (110 of FIG. 2) does not face the positive electrode tab (121 of FIG. 1) or the negative electrode tab (122 of FIG. 1). The regions, pressurized by the first block member 211, may be the second sealing portion (140 of FIG. 1) in the case (110 of FIG. 1).

The plurality of second block members 213 may pressurize a region in which the case (110 of FIG. 1) does not face the positive electrode tab (121 of FIG. 1) or the negative electrode tab (122 of FIG. 1). The region, pressurized by the plurality of second block members 213, may be the first sealing portion (130 of FIG. 1) in the case (110 of FIG. 1).

In an exemplary embodiment, the first block member 211 and the plurality of second block members 213 may be formed to be integrated with each other. Accordingly, the first block member 211 and the second block member 213 may be simultaneously moved by moving the first moving member (231 of FIG. 2) once. In addition, the first block member 211 and the second block member 213 may be moved in a negative Y-direction by the same amount by moving the first moving member (231 of FIG. 2) once.

Accordingly, the first sealing portion (130 of FIG. 1) and the second sealing portion (140 of FIG. 1) may be simultaneously formed on the case (110 of FIG. 1) of the battery cell by moving the first moving member (231 of FIG. 2) only once.

The above description may be applied to the second sealing block (220 of FIG. 2), based on the same principle.

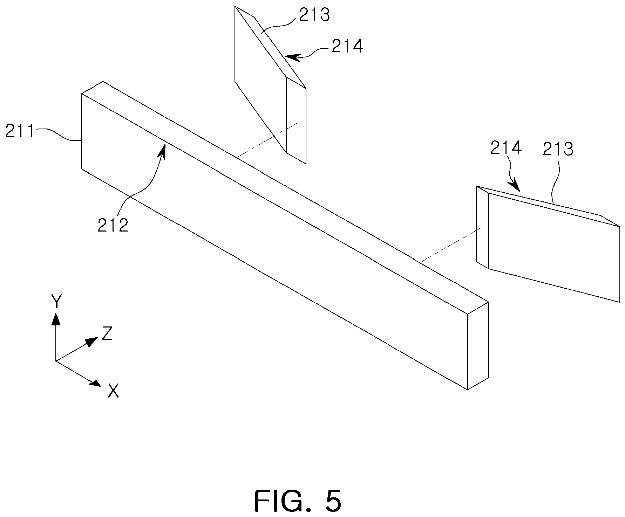

FIG. 5 is a perspective view of a first sealing block 210 according to another exemplary embodiment.

As illustrated in FIG. 5, in an exemplary embodiment, a first block member 211 and a plurality of second block members 213 may be provided in a mutual division type. The plurality of second block members 213 may be provided to be coupled to or removed from the first block member 211.

The plurality of second block members 213 may be provided to be detachable to the first block member 211. A coupling member such as a bolt, not illustrated, may be used to couple the plurality of second block members 213 to the first block member 211, but a method of coupling the plurality of second block members 213 to the first block member 211 is not limited thereto.

When the first moving member (231 of FIG. 2) is moved in a state in which the plurality of second block members 213 are removed from the first block member 211, the first sealing block 210 may be moved in a negative Y-direction to form the second sealing portion (140 of FIG. 1) first on the case (110 of FIG. 1).

Then, the first moving member (231 of FIG. 2) may be moved to move the first sealing block 210 in a positive Y-direction and to couple the plurality of second block members 213 to the first block member 211. In this state, when the first moving member (231 of FIG. 2) is moved in the negative Y-direction, the first sealing portion (130 of FIG. 1) may be formed on the case (110 of FIG. 1).

Meanwhile, when the first moving member (231 of FIG. 2) is moved in a state in which only the plurality of second block members 213 are connected to the first moving member (231 of FIG. 2), the first sealing portion (130 of FIG. 1) may be formed first on the case (110 of FIG. 1).

Then, when the first moving member (231 of FIG. 2) is moved by coupling the second block member 213 and the first block member 211 to each other, the second sealing portion (140 of FIG. 1) may be subsequently formed the case (110 in FIG. 1) has of 1 may be subsequently formed on the case (110 of FIG. 1). This may be equally applied to the second sealing block (220 of FIG. 2), based on the same principle.

Accordingly, the first sealing portion (130 of FIG. 1) and the second sealing portion (140 of FIG. 1) may be selectively formed on the case (110 of FIG. 1) using only the first sealing block 210 and the second sealing block (220 of FIG. 2). Thus, the number of components of the battery cell sealing apparatus may be decreased, and operational efficiency of the battery cell sealing apparatus may be improved.

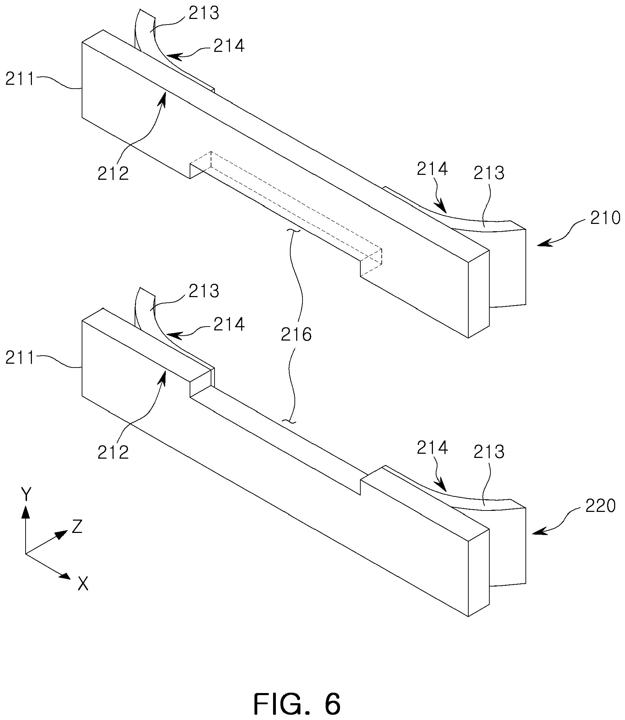

FIG. 6 is a perspective view of a first sealing block 210 and a second sealing block 220 according to another exemplary embodiment.

As illustrated in FIG. 6, in another exemplary embodiment, a plurality of second block members 213 may be nonlinearly inclined with respect to an X-axis, and an inclined region 214 of the second block member 213 may include a curve.

Accordingly, the first oblique sealing portion (131 of FIG. 1) and the second oblique sealing portion (132 of FIG. 1) of the case (110 of FIG. 1) may be provided to include a curve. The case (110 of FIG. 1), in which the first oblique sealing portion (131 of FIG. 1) and the second oblique sealing portion (132 of FIG. 1) include a curve, may induce a larger amount of gas to a region in which the positive electrode tab (121 of FIG. 1) or the negative electrode tab (122 of FIG. 1) is present. This may be equally applied to the second sealing block 220.

In addition, in another exemplary embodiment, at least one of the first sealing block 210 and the second sealing block 220 may include a notch 216.

In an exemplary embodiment, the notch 216 may be formed in a straight region 212 of the first sealing block 210, and may be equally applied to a straight region 212 of the second sealing block 220.

When the contact between the first sealing block 210 and the second sealing block 220 is finished during thermal fusion of the case (110 of FIG. 1), the notch 216 formed in the first sealing block 210 and the notch 216 formed in the second sealing block 220 may meet each other to form a single hole.

The positive electrode tab (121 of FIG. 1) or the negative electrode tab (122 of FIG. 1) may be inserted into the hole formed by meeting the notch 216 formed in the first sealing block 210 and the notch 216 formed in the second sealing block 220. Accordingly, the first sealing block 210 and the second sealing block 220 may be prevented from interfering with the positive electrode tab (121 of FIG. 1) or the negative electrode tab (122 of FIG. 1) when the case (110 of FIG. 1) is sealed.

However, only one of the first sealing block 210 and the second sealing block 220 may be provided with the notch 216. However, this is not limited by exemplary embodiments and may be appropriately selected and applied in consideration of the thickness of the positive electrode tab (121 of FIG. 1) or the negative electrode tab (122 of FIG. 1).

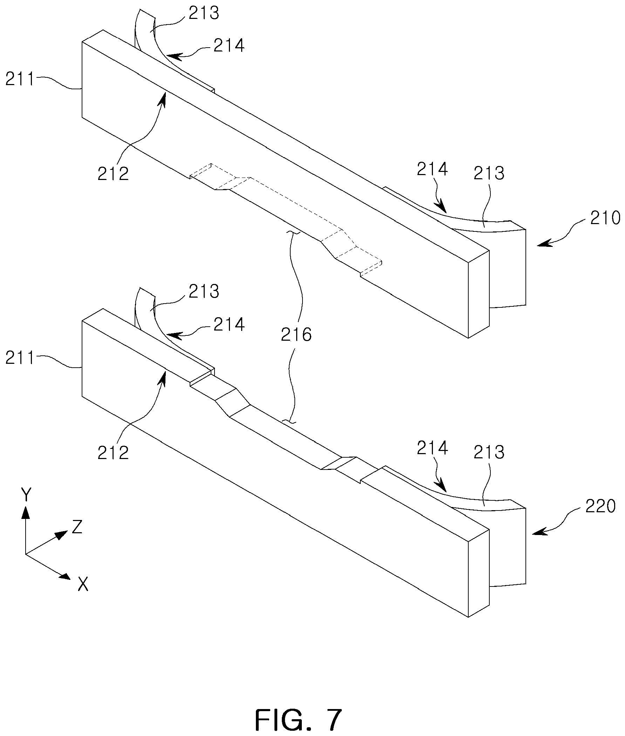

FIG. 7 is a perspective view of a first sealing block 210 and a second sealing block 220 according to another exemplary embodiment.

As illustrated in FIG. 7, in another exemplary embodiment, a notch 216 may be formed in a straight region 212 of the first sealing block 210 and may be equally applied to a straight region 212 of the second sealing block 220. When contact between the first sealing block 210 and the second sealing block 220 is finished, the notch 216 formed in the first sealing block 210 and the notch 216 formed in the second sealing block 220 may meet each other to form a single hole.

The notch 216 may be formed to have a multistage structure in a direction, parallel to an X-axis. Also, the notch 216 may include a region, inclined linearly with respect to the X-axis, and a region, parallel to the X-axis.

Accordingly, the first sealing block 210 and the second sealing block 220 may be prevented from interfering with the positive electrode tab (121 of FIG. 1) or the negative electrode tab (122 of FIG. 1) when the case (110 of FIG. 1) is sealed. In addition, tearing, deformation, and fracture of the case (110 of FIG. 10 may be prevented from occurring when the case (110 of FIG. 1) is thermally fused.

According to the above-described exemplary embodiments, a plurality of sealing portions may be formed on a case of a battery cell. In addition, the number of components of a battery cell sealing apparatus may be decreased, and operational efficiency of the battery cell sealing apparatus may be improved.

As set forth above, according to exemplary embodiments, a plurality of sealing portions may be formed on a case of a battery cell.

In addition, the number of components of a battery cell sealing apparatus may be decreased, and operational efficiency thereof may be improved.

While example embodiments have been shown and described above, it will be apparent to those skilled in the art that modifications and variations could be made without departing from the scope of the present disclosure as defined by the appended claims.

### Embodiments:

1. A battery cell sealing apparatus comprising:
   a first sealing block and a second sealing block pressurizing a case, provided with an accommodation space in which an electrode assembly is accommodated, to seal the case;
   a moving unit connected to at least one of the first sealing block and the second sealing block and moving at least one of the first sealing block and the second sealing block; and
   a heating unit connected to the first sealing block and the second sealing block and supplying heat energy to the first sealing block and the second sealing block,
   wherein
   the first sealing block and the second sealing block include a plurality of block members and pressurize the case with the plurality of block members to form a plurality of sealing portions on the case.
2. The battery cell sealing apparatus of embodiment 1, wherein the first sealing block and the second sealing block comprise:
   a first block member including a straight region; and
   a plurality of second block members, respectively including an inclined region branching off from the straight region and having an outer circumference of which at least a region is not in contact with the straight region.
3. The battery cell sealing apparatus of embodiment 2, wherein
   the plurality of second block members pressurize a region, in which the case is not in contact with a positive electrode tab or a negative electrode tab of the battery cell, to form a first sealing portion on the case, and
   the first block member pressurizes a region, in which the case is in contact with the positive electrode tab or the negative electrode tab of the battery, and a region, in which the case is not in contact with a positive electrode tab or a negative electrode tab of the battery cell, to form a second sealing portion on the case.
4. The battery cell sealing apparatus of embodiment 3, wherein
   the inclined regions of the plurality of second block members are inclined in different directions.
5. The battery cell sealing apparatus of embodiment 4, wherein
   the inclined regions of the plurality of second block members are linearly inclined.
6. The battery cell sealing apparatus of embodiment 4, wherein
   the inclined regions of the plurality of second block members are nonlinearly inclined.
7. The battery cell sealing apparatus of embodiment 1, wherein
   the first sealing block and the second sealing block simultaneously form the plurality of sealing portions on the case.
8. The battery cell sealing apparatus of embodiment 1, further comprising:
   a stopper unit connected to the first sealing block and the second sealing block and limiting moving distances of the first sealing block and the second sealing block.
9. The battery cell sealing apparatus of embodiment 1, wherein
   at least one of the first sealing block and the second sealing block is provided with a notch.
10. The battery cell sealing apparatus of embodiment 2, wherein
   the plurality of second block members are provided to be coupled to or removed from the first block member.

## Claims

1. A battery cell sealing apparatus comprising:
a first sealing block and a second sealing block pressurizing a case, provided with an accommodation space in which an electrode assembly is accommodated, to seal the case;
a moving unit connected to at least one of the first sealing block and the second sealing block and moving at least one of the first sealing block and the second sealing block; and
a heating unit connected to the first sealing block and the second sealing block and supplying heat energy to the first sealing block and the second sealing block,
wherein
the first sealing block and the second sealing block include a plurality of block members and pressurize the case with the plurality of block members to form a plurality of sealing portions on the case.

2. The battery cell sealing apparatus of claim 1, wherein
the first sealing block and the second sealing block comprise:
a first block member including a straight region; and
a plurality of second block members, respectively including an inclined region branching off from the straight region and having an outer circumference of which at least a region is not in contact with the straight region.

3. The battery cell sealing apparatus of claim 2, wherein
the plurality of second block members pressurize a region, in which the case is not in contact with a positive electrode tab or a negative electrode tab of the battery cell, to form a first sealing portion on the case, and
the first block member pressurizes a region, in which the case is in contact with the positive electrode tab or the negative electrode tab of the battery, and a region, in which the case is not in contact with a positive electrode tab or a negative electrode tab of the battery cell, to form a second sealing portion on the case.

4. The battery cell sealing apparatus of any of claims 2 or 3, wherein
the inclined regions of the plurality of second block members are inclined in different directions.

5. The battery cell sealing apparatus of any of claims 2 to 4, wherein
the inclined regions of the plurality of second block members are linearly inclined.

6. The battery cell sealing apparatus of any of claims 2 to 4, wherein
the inclined regions of the plurality of second block members are nonlinearly inclined.

7. The battery cell sealing apparatus of any of claims 1 to 6, wherein
the first sealing block and the second sealing block simultaneously form the plurality of sealing portions on the case.

8. The battery cell sealing apparatus of any of claims 1 to 7, further comprising:
a stopper unit connected to the first sealing block and the second sealing block and limiting moving distances of the first sealing block and the second sealing block.

9. The battery cell sealing apparatus of any of claims 1 to 8, wherein
at least one of the first sealing block and the second sealing block is provided with a notch.

10. The battery cell sealing apparatus of any of claims 2 to 9, wherein
the plurality of second block members are provided to be coupled to or removed from the first block member.
